# EUROPEAN PATENT SPECIFICATION

(11) **EP 1 550 930 B1**
(45) Date of publication and mention of the grant of the patent: **01.08.2007**
(21) Application number: 03079045.5
(22) Date of filing: 15.12.2003
(51) Int. Cl.: G06F 1/00

(54) **A method for restraining the re-distribution of licensed data in a digital mobile environment**
Verfahren zum Beschränken der Wiederverteilung von lizensierten Dateien in einem digitalen Mobilfunksystem
Procédé pour restreindre la redistribution de données sous licence dans un système radio mobile numerique

(43) Date of publication of application: 06.07.2005
(73) Proprietor: Mobile Integrated Solutions Limited, Dublin 3 (IE)
(72) Inventor: Lindahl, Göthe, 90594 Urnea (SE); Nilsson, Mikael, 91433 Nordmaling (SE); Fogerty, James, Dublin 24 (IE); Adolfsson, Magnus, 903 36 Umea (SE)
(74) Representative: Lane, Cathal Michael

(56) References cited:
- EP-A- 1 076 279
- EP-A- 1 191 422
- WO-A-98/42098
- US-A- 5 991 399
- US-A- 5 995 623
- US-A- 6 108 420
- US-B1- 6 367 019

## Description

### Field of the Invention

The present invention relates to a method and system for restraining licensed data being redistributed between users in a mobile environment.

### Background to the Invention

It has always been in the interests of the retail trade to curtail the practise of a customer purchasing one product, and subsequently sharing this purchase among a number of consumers, because of the resulting potential loss of revenue. There have been several attempts to try to prevent this consumer practise. In the case of books and software for example, the rights of the retailer to prevent redistribution and copying have been recognised by law.

The issue of providing protection against consumers redistributing their purchases is even more crucial in today's technological era, with the considerable growth in the sale of software related products which can be very easily copied. One software field which has experienced phenomenal growth is that of mobile phone related software, where the licensing and/or purchasing of products such as ring tones, music, video clips and games which can be downloaded to a customer's mobile handset has become increasing popular. These products can generally be transferred between handsets without difficulty, for example by means of the built-in infra red port, bluetooth communication, memory cards, or connecting the phones via cables. It is therefore vital that the product distributor can provide a means for preventing such redistribution of their products, so as to ensure that they receive their fair share of financial reward for providing such products and services. Furthermore, it has become increasing common for consumers to purchase a license to use a product, the type of license purchased determining the rights the consumer has in relation to the product. For example, a license could be purchased to allow a user to use a piece of software for a specified time interval only, or to allow a user read-only access to the software application. In this regard, it will be appreciated that it is very important that the license distributor has the ability to prevent a user from using a purchased product outside the terms of the purchased license agreement.

There exist a number of methods for restraining data which has been licensed by a retailer from being used by anyone other than the purchaser which can be implemented electronically. A typical method involves the use a of PIN code. In this method, a purchaser is provided with a PIN code for use with the purchased application. This PIN code is always requested prior to enabling access to the application. However a drawback of this method is that at the same time the user has entered the PIN code, the material is also released, and could potentially be copied to other devices.

Another system which is in use is known as Digital Rights Management (DRM). DRM is a protocol which may be implemented in systems where wireless devices download licensed products from an application server. It involves the creation of a rights file associated with each data file requested by a wireless user. This rights file details the rights the user has purchased in relation to the requested data. The rights file may be transmitted to the wireless device either together or separately with the data requested. The DRM system examines the downloaded rights file and ensures that the purchaser is only permitted to use the downloaded data in accordance with the specified rights.

The main problem with some digital rights management systems is their lack of security. These systems can require a user to have access to an encryption key in order to decode the downloaded data. However, there is no means of preventing a hacker from obtaining the encryption key and subsequently enabling another user to access the data from another device without authorisation.

European patent application EP 1 271 279 entitled " Binding a digital license to a portable device or the like in a digital rights management (DRM) system and checking out/checking in the digital license to/from the portable device or the like" describes an invention which makes use of a DRM system for portable devices. In this system, digital content requested by a customer is transmitted to the customer's device regardless of whether the user has already obtained a license to play or render the digital content. The requested data is distributed in encrypted form to a user's device via any suitable means such as the internet or another network, via e-mail etc. The obtaining of a license to use the digital content is effected in a separate interaction with a license server.

The invention includes a DRM system that is enabled when a user attempts to render or play digital content downloaded to their device. The DRM system determines whether the user has a license to play the digital content in the manner sought, and effectuates obtaining such a license if necessary.

The system includes a license evaluator which determines whether the user has a license to render the digital data in the manner sought. This may include having to refer to other data local to the user's device, such as for example an identification of the user's machine, or of the system clock. If no valid license is found, information regarding how to obtain such a license can be found in the downloaded digital content. This information may include details of an internet site where an appropriate license server is hosted for receiving license requests.

The system also includes a black box, which is located on the user's device. One of the purposes of the black box is to tie a license to a user's device, in an attempt to prevent any request rendering to proceed on any device other than the device which has been licensed. The black box is involved in the acquisition of licenses. The black box is also responsible for the decryption of digital content on determination that the user has a valid license to render the digital content. It contains a public key, a private key and a unique version number. During license acquisition, the license server is provided with the required decryption key for decrypting the requested digital content. This decryption key is then encrypted with the black box public key of the device. When a user wishes to render a piece of digital data, the black box can decrypt the decryption key contained in the license by using its private key, and can subsequently employ the decryption key to decrypt the digital data.

The black box must be initialised prior to the first use of a user's computing device in the rendering of downloaded digital content. During initialisation, the black box is provided with a unique public/private key pair and a version number, so as to tie the black box uniquely to a user's device. The system additionally provides an extra security feature, where the version number of the black box is checked prior to each user's request to render a piece of digital content. If the version number is detected as being relatively old, the black box must be upgraded prior to use.

It is clear that the above invention implements a number of safeguards in an attempt to prevent the redistribution of data between devices. However there remain a number of problems with this system. Firstly, it is possible for the black box to be interfered with, so as to enable the data to be transferred between devices. The invention has attempted to limit this risk by requiring that the version number of the black box be updated at regular intervals. However it will be appreciated that there still remains a substantial risk.

Secondly, the invention requires a significant number of steps before enabling a consumer to render a piece of digital data, especially where a customer requests a new data application. In this case, the data and license must be requested and transmitted separately. Furthermore, the black box must be updated at regular intervals, which requires a further input of the user's time. A further problem with this invention is that it requires a substantial amount of memory and processing power to implement due to its complexity. It is therefore not suitable for implementation on devices which have limited memory or processing power.

International Patent Publication No. WO98/4209 discloses a digital product rights management technique. US Patent No. 5,995,623 discloses an information processing apparatus with a software protecting function.

### Object of the Invention

There is therefore a need to provide an improved method and system for restraining licenced data from being distributed between users.

### Summary of the Invention

According to a first embodiment of the present invention as set out in the appended claims, a method is provided of associating data with a client device so that the data can be used only in conjunction with the client device. The method comprises the steps ot :
associating data sent from a server for use with an application on the client device with a client device dependent code; and
   encrypting the associated data with the client device dependent code and decrypting the data on the client device if the condition that the client device has the same client device dependent code is met.
   The association of the data with a client device dependent code, which provides a function unique to the client device, provides an very robust method of preventing the data from being decrypted on any other device other than the client device which is associated with the data.

The step of encrypting the associated data preferably comprises using the client device dependent code as an encryption key.

The step of encrypting the associated data desirably further comprises encrypting the data with one or more encryption algorithms contained in an algorithm table associated with the application.

The provision of encrypting the data with one or more encryption algorithms contained in an algorithm table provides a more secure encryption method.

Desirably, the data is encrypted on the server.

The method may further comprise the steps of :
sending a request for data from the client device to the server, the request including the device dependent code comprising a unique device code and an application I.D. associated with the application requiring data from the server;
receiving the request on the server and encrypting the data using one or more encryption algorithms contained in an algorithm table provided on the server associated with the application I.D. in conjunction with the device dependent code; and
sending the encrypted data to the client device.

The decryption of the data on the client device is desirably carried out by utilising one or more encryption algorithms provided on a copy of the algorithm table located on the client device associated with the application I.D. in conjunction with the device dependent code.

The method may include the further step of sending a key associated with the client device from the server to the client device when the application is run on the client device and wherein the request is scrambled by the key.

The decryption of the data on the client device is desirably carried out in conjunction with the key sent from the server.

The advantage of this approach is that server-client interaction is required in order for the application on the client device to be able to decrypt the data, even when the data has been downloaded on the client device. This makes it impossible for the data to be used by a client device without the consent of the server.

The data may be encrypted with an additional key provided by the server.

The data preferably comprises one or more individual data files, each data file corresponding to data encrypted by a different encryption algorithm from the algorithm table.

The encrypted data preferably contains one or more fields which are set to contain the index to the algorithm required to decrypt the next data file in the series of encrypted data files.

Preferably, a program code for the application is stored on the client device and a copy of the program code is stored on the server. On startup of the application the server may request the client device to transmit a portion of the program code for the application stored on the client device to the server.

The server may compare the transmitted portion of program code with the corresponding portion of program code stored on the server.

This feature makes it extremely difficult for illegal program code put on a client device to make use of the data after it has been decrypted, as the program code may be compared at any time with the copy of the program code on the server.

Preferably the device is a mobile phone.

Preferably the device dependent code comprises an application identifier and a unique device code.

Desirably, the unique device code may be one or more of the following identifiers:
a) an IMEI code of the mobile phone
**b)** an IMSI code of the mobile phone
**c)** a SIM card serial number (SER) of the mobile phone
d) an MSISDN of the mobile phone.

The client device may be a computer with a telephone number connected to a modem associated with the computer being used as the device dependent code.

The method may comprise the further step of switching between algorithms during one of the following situations :
a) after a set period of time,
b) after the encoding of a predefined volume of data, or
c) on a file by file basis.

The invention also provides a method of associating data to be sent from a server to a client device so that the data can be used only in conjunction with an associated application when resident on the client device, the method comprising the steps of :
sending data from the server to the client device encrypted with a client device dependent code;
identifying, on the client device, an encryption algorithm associated with the application on the client device;
using a device dependent code associated with the application to decrypt the data in accordance with the encryption algorithm, wherein the data is decrypted if the condition that the client device has the same client device dependent code is met.

The invention also provides a system for associating data with a client device so that the data can be used only in conjunction with the client device, the system comprising:
means for associating data sent from a server for use with an application on the client device with a client device dependent code; and
means for encrypting the associated data with the client device dependent code and decrypting the data on the client device if the condition that the client device has the same client device dependent code is met.
The means for associating the data may be implemented by any means, such as software, and is not intended to be restricted to any means described herein.
The means for encrypting the associated data may also be implemented by any means, and is not intended to be restricted to any means described herein.

These and other features of the present invention will be better understood with reference to the following drawings.

### Brief Description of the Drawings

Figure 1 illustrates a typical exchange of information between a client and a server according to the present invention;
Figure 2 illustrates a process flow in the present invention for requesting data from a server, and decrypting the data for use on a client device;
Figure 3 shows the format of the request transmitted from the client to the server;
Figure 4 shows the format of a typical algorithm table, and;
Figure 5 illustrates the format of messages transmitted from the server to the client.

### Detailed Description of the Drawings

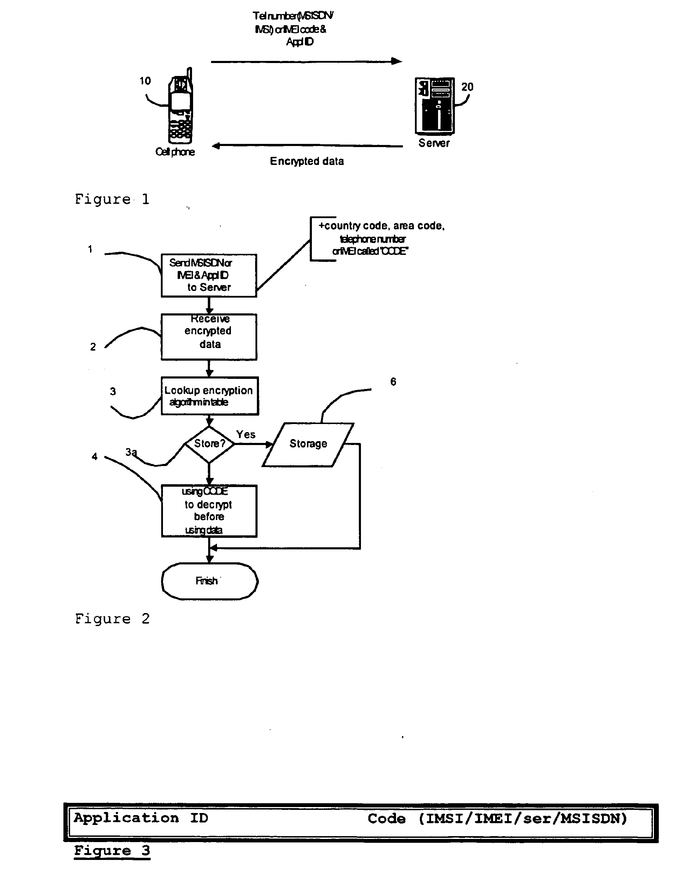

The present invention will now be described with the aid of the accompanying Figures 1-5.

The present invention provides a method for a client device to obtain data from a server for use with a selected data application provided on the client device. The data is encrypted in conjunction with a client device specific code, so as to prevent the data from being used both by other applications on the client device, and also by any device other than the device which requested the data. The invention additionally requires the client device to obtain a key from the server each time before the client device is enabled to use the downloaded data with the application.

In accordance with one aspect of the invention, when a user of a client device runs a selected application provided on the client device, it receives a key from a server that identifies the client device to the server. This key is a unique key which is set by the server to associate with the specific client device, and this same key is sent each time an application is run by the client device. When the client wishes to obtain data for use in conjunction with the selected data application, it transmits a request to the server encoded by the key received from the server. The server processes the request and then transmits to the user the requested data in encoded form. The requested data is encoded in such a manner so that it can only be decoded by both the selected application and the client device which requested the data.

The invention will be described with reference to a specific embodiment for use in the mobile phone environment. However, it will be appreciated that the invention is not intended to be limited to mobile phone environments. The invention could equally well be implemented for use with other types of devices and/or where the data is transmitted over a different medium, for example over the internet.

Figure 1 illustrates a typical exchange of information between a mobile phone device or client 10 and a server 20 according to one embodiment of the present invention, when the client wishes to download data for use with an application provided on the client device. The client 10 runs the selected application provided on the client device, and in so doing receives a key from a server via GPRS or GSM data that identifies the client 10 to the server 20. The client 10 sends a request for data for use with a specific application provided on the client device to the server 20. The application is already provided on the client device (as well as in the server device), and the retrieval method is not explained further in this document. The request includes a scrambled version of a unique device dependent code (DDC). The DDC comprises the application I.D. associated with the application provided on the client device in which the requested data will be used, and a unique device code. The DDC is scrambled by means of the key provided to the client by the server.

The server 20 processes the request and encodes the data to be transmitted to the client 10 using the DDC as the encryption key, or part of the encryption key. Data may be transmitted to and from the server by a variety of methods, such as SMS, circuit switched data transmission or packet switching.

Figure 2 shows the process flow of a typical request for data by a client 10 to a server 20. In step 1 a request for data for use with a specific application provided on the client device is sent from the client 10 to the server 20. When the server receives a request for data, it extracts the application I.D. from the message request. The server then determines based on the application I.D. an algorithm table which is to be used to encode the requested data. The server then encodes the data requested in accordance with the algorithms in the selected algorithm table located on the server, using the Device Dependent Code (DDC) as part or all of the encryption key. Where the DDC is used as part of the key, the remainder of the key is provided by another encryption key located on the server.

Once the data is encoded, the server transmits the requested data in encoded format to the client, typically over an SSL encrypted link. In cases where the DDC is only used as part of the encryption key, any further encryption key used to encode the data is also transmitted from the server to the client as part of the data transmission process.

The client receives the requested data in the form of one or more encrypted data files (step 2), each of which include an index to the algorithm located on a copy of the algorithm table used by the server to encode the data, which is provided on the client device (step 3). The individual data files with their associated index may then be stored on the client device in the encoded state. Where an additional key is used to encode the data on the server side, this key is transmitted to the client before the one or more data files are sent.

In step 3a, The user of the client device can choose to either run the application immediately, or alternatively to keep the data stored for use with the application at a later date (step 6).

Each time a user runs an application provided on the client device requiring data which must be obtained from the server as described above, the client device receives a key from the server. If the data has already been downloaded, the one or more encoded data files and their associated indexes to the encoding algorithms can be retrieved from inside the application memory on the client device. The required algorithm table detailing these encoding algorithms is determined from the application I.D associated with the application in which the downloaded data is to be used. The data can then be decoded using a combination of the algorithms defined in the selected algorithm table, the key provided by the server when the application was run, and also the device dependent code (DDC) (step 4). If the data was encrypted by the server using a further encryption key, then this key is additionally used in the decryption process.

It should be noted that the key provided by the server when the application is run is provided each time the application is run, regardless of whether the required data has previously been downloaded or not. This key is unique key associated with the client device. This key is never stored on the client device.

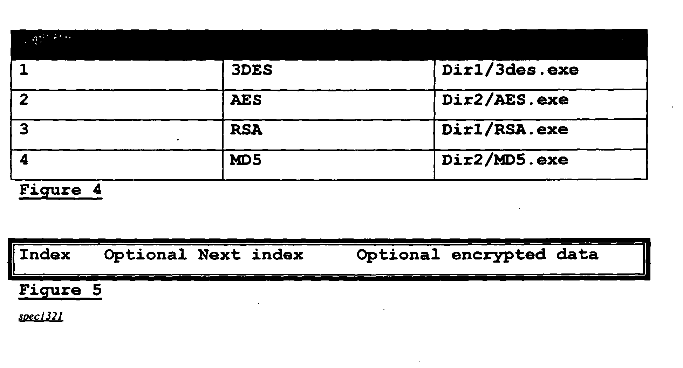

Figure 3 shows the format of the message request which is transmitted from the client to the server when the client requests data for use with an application provided on the client device. It comprises two fields, which together make up the Device Dependent Code (DDC). The first field contains an application identifier, the application I.D.. The application I.D. is a unique identifier associated with the application provided on the client device in which the requested data will be used. The application ID is preferably a unique international Symbian Application ID or an EAN (European Article Number) number. However, it could equally be any other suitable code or number. The second field contains a unique device code. This code is not a code that is given by the server to the client device, rather it is a code that is inherent to the function of the device i.e. a change in the code would alter the working characteristics of the device. This code may have been provided by a service provider or the manufacturer of the phone for example, so that a changing of the code would require for example a user to change their phone number, or to change phones. Typically this would be the IMEI code (International Mobile Equipment Identification code) of the mobile phone, the IMSI code (International Mobile System Identifier) or the SIM card serial number (SER). It could also be the international phone number of the mobile phone i.e. the MSISDN (Mobile Subscriber ISDN)of the phone. The DDC code could alternatively be made up of a combination of a number of separate codes.

The application I.D. is retrieved from the application on the client device without requiring any user input. Similarly, the device code is retrieved from the device without any user intervention. It will be appreciated that new versions of an application which require a new algorithm table are treated as new applications. The DDC is scrambled prior to transmission to the server using the key provided by the server to the client device when the client device runs the selected application.

When the message request is received by the server, the server extracts the application I.D. from the request. As previously mentioned, each application I.D. has an unique algorithm table associated with it. The encoding and decoding of the data is carried out in conjunction with this algorithm table. The algorithm table is located both at the server and the client. When a client initially uses the service, they are supplied with a copy of the algorithm table which exists on the server. The table is created when the client application is created and the server table is updated, if needed, and any new encryption algorithm is placed at the server. The server update is typically a manual operation. In this way, once the algorithm table is copied on the client device, it is never transmitted across the network again. Instead, a copy of the table is kept on both the client and server side.

Figure 4 shows the format of a typical algorithm table. Each entry in the algorithm table may comprise up to three fields. The first field is the index field. The second field contains the name of the algorithm associated with a particular index, while the third field details the location of where this algorithm is stored. It will be appreciated that as each client device may store algorithms in a different location, the algorithm location information should reflect the location of the algorithm on a particular device, both on the client and the server side. The client application updates the location on its side and the server updates the location of the algorithm on its own side. It will also be appreciated that the algorithm location details may be omitted in cases where the algorithms are built into the application provided on the client device. The algorithm table details as many algorithms as deemed necessary for encoding data for use with a particular application. Preferably, a minimum of three entries should be provided per algorithm table, so as to ensure a secure encoding of data. However all of the algorithms in a particular algorithm table do not have to be used to encode data for use with an application associated with a particular algorithm table. This decision as to how many algorithms are to be used from a particular algorithm table for encoding the data can be made during run-time.

Once the required algorithm table associated with the application I.D. has been located by the server, the server encodes the requested data for use with the application located on the client device in accordance with the algorithms detailed in the algorithm table. The data is encoded with the algorithms using the DDC as a key, and optionally with an additional key located on the server.

An integral part of the encryption process involves the determination as to when to switch between the encoding algorithms within an algorithm table. The server contains details of the switch method associated with each algorithm table. This information is connected to the application ID, and can be either located in a separate file or built-in into the server. The determination of when to switch between algorithms can be carried out by a number of methods. The switch can be set to occur after a set period of time, after the encoding of a predefined volume of data, on a file by file basis, or on the occurrence of some other random variable. Where the method used to determine the switching between algorithms is selected to be carried out on a file by file basis, the first data file is typically encoded by the algorithm defined in index number 1 of the algorithm table, the second data file is encoded by the algorithm defined in index number 2 and so on. In the same way, where the method used to determine the switching between algorithms is selected to be carried out on a time basis, the first block of data in a predefined time interval is encoded according to the algorithm associated with index=1, the second block of data in the next predefined time interval is encoded according to the algorithm associated with index=2 and so on.

Each time the encyption algorithm is varied, a new encoded data file is created. Therefore all data which has been encoded by means of the same encryption algorithm is contained within an individual file, so that the number of separate encoded files equals the number of encryption algorithms used.

The format of messages transmitted from the server to the client is illustrated in Figure 5. The header or first field may contain the index to an algorithm defined within the algorithm table associated with the application I.D. for decoding at least a portion of the data requested for a particular application. This index is encoded. The trailer or last field may contain the encrypted data. This data may be made up of one or more individual data files, each data file corresponding to data encrypted by a different encryption algorithm from the algorithm table. The one or more fields provided between the header and trailer are optional. These fields may be used where the data has been encoded by more than one algorithm defined within the algorithm table associated with a particular application. When these fields are in use, each field is set to contain the index to the algorithm required to decode the next data file in the series of encoded data files contained within the encrypted data file. When this field is not required it is set to zero. The next index field may be used both by the server and client so that it can prepare to load in advance a new encryption algorithm and also to jump between different encryption methods. This may be useful when the system is being used in conjunction with small client devices, where they might require some time to prepare in advance so that they do not lose pace when they are receiving data from the server.

It will be appreciated that when the server is transmitting the key associated with the client device to the client as a result of the client running an application on the server, the message would simply contain the key in the encrypted data field.

The present invention also provides an additional security feature which ensures that the executable program code for a data application stored on a client device which may be associated with data downloaded from a server can not be totally or partially exchanged by external program code. This functionality is facilitated by the server storing a copy of the program code for each application stored on each client device. The server can then verify that the program code has not been interfered with since its installation on a client device, by comparing a portion of the program code stored on a client device with the copy of the portion of program code stored on the server. This check may be carried out on startup of the application on a client device, or when its associated sub-program is run. The check may be carried out every time the application starts up, or when required, depending on the desired level of security of the system.

This check is typically performed by the server requesting from a client device a random byte of the program code for a selected application installed on the client device. This byte is transmitted by the client to the server. The server then compares this byte with the corresponding byte stored at the server. If the bytes match, it confirms that the program code for the application has not been altered since installation on the client device. However, if the bytes do not match, it signals that the program code has been tampered with since installation on the client device. In this case, the client is not authorised to use the application either at all, or in the manner in which it is attempted to be used. If the program code does not match, then the server will not make any service to the client i.e. it will not enable the client device to receive keys and new data from the server.

In another embodiment of the invention, link libraries codes may also be checked, so as to verify whether the called programs are called by an authorised caller. This may be in addition or instead of comparing portions of program codes..

It will be appreciated that the present invention could be used in conjunction with any suitable downloading method, for example on a file by file basis, or via streaming. In the case of data downloaded by streaming, each data block is received and decoded in the same manner as for other methods of downloading. However, for continuous streamed data, the data is used by the client application as soon as it is received and decoded. Once the data has been used as required, it is deleted, and no data is stored on the client device.

The invention also can be used in conjunction with a server which provides for the downloading of licensed data. In this case, when the client device requests licensed data, the encrypted information in the file also contains information about expiration. This may include a counter which provides for the number of times the data can be used and/or an expiration date.

In the case of a counter, the application decreases the counter each time it is used, and rewrites it in the file. Where streaming is used, it is typically the responsibility of the server to keep track of the counter.

When an expiration date is used, it is typically the server which sets the date. It is then the responsibility of the client application to check this date, and to delete the data when the date occurs. In the case of streaming, no such verification is generally required, because data is used instantly and then destroyed on the client device.

This invention can also be used in conjunction with any suitable payment system which provides for the processing of transactions between a client and server, in situations where it is desirable that a client is able to purchase licensed data from the server. In this case, the initial request for data from the client to the server may include fields relating to payment for the requested data. For example, if a user requests a number of separate data files from the server, the request may include a payment field for these data files. However a request for payment could be implemented in a number of ways, for example by the using of automatic SMS messages (encrypted) for payment. The GPRS or data connection would then not carry any payment information. This is not needed because the client would be known to the server through the DDC and the payment would be carried out in advance. A credit accumulator would then be set corresponding to the payment, which would be decreased for each downloaded data file.
The present invention is not intended to be limited to a mobile environment. For example, in another embodiment of the invention, a desktop pc having a built-in modem could be used as the client device, with the telephone number of the modem being used as the unique device code. The telephone number of the modem could be obtained using a telephone API, such as Windows TAPI, UNIX UTAPI, Java JTAPI or any other suitable API. Such APIs enable the telephone line to be disconnected and the CALL INFO variable to be received from the telephone operators system. This CALL INFO variable includes the telephone number, which could then be used to tie any downloaded data to the pc, so as to ensure that the program or the data could not be copied and distributed to other users.

The present invention provides a simpler implementation of a digital rights management system with increased security features. The use of the device dependent code in the decryption process ensures that the data can not be decoded on any other device other than the device which has been authorised to use the data application or by any other application residing on the client device.

The invention can be used in conjunction with the Open Mobile Alliance Digital Rights Management specification, or other DRM systems. It can also be used by itself for devices that can not implement a complex DRM system due to limited hardware resources.

The words "comprises/comprising" and the words "having/including" when used herein with reference to the present invention are used to specify the presence of stated features, integers, steps or components but does not preclude the presence or addition of one or more other features, integers, steps, components or groups thereof.

## Claims

1. A method of associating data with a client device so that the data can be used only in conjunction with the client device, the method comprising the steps of :
associating data sent from a server for use with an application on the client device with a client device dependent code; and
encrypting the associated data with the client device dependent code and decrypting the data on the client device if the condition that the client device has the same client device dependent code is met, the method **characterized in that**
a program code for the application is stored on the client device and a copy of the program code is stored on the server, wherein on startup of the application the server requests the client device to transmit a portion of the program code for the application stored on the client device to the server and the server compares the transmitted portion of program code with the corresponding portion of program code stored on the server, and if the program codes do not match, no services are provided by the server to the client.

2. The method as claimed in claim 1 wherein the step of encrypting the associated data comprises using the client device dependent code as an encryption key.

3. The method as claimed in claim 2 wherein the step of encrypting the associated data further comprises encrypting the data with one or more encryption algorithms contained in an algorithm table associated with the application.

4. The method as claimed in any of the preceding claims wherein the data is encrypted on the server.

5. The method as claimed in any of the preceding claims further comprising the steps of :
sending a request for data from the client device to the server, the request including the device dependent code comprising a unique device code and an application I.D. associated with the application requiring data from the server;
receiving the request on the server and encrypting the data using one or more encryption algorithms contained in an algorithm table provided on the server associated with the application I.D. in conjunction with the device dependent code; and
sending the encrypted data to the client device.

6. The method as claimed in claim 5 wherein the decryption of the data on the client device is carried out by utilising one or more encryption algorithms provided on a copy of the algorithm table located on the client device associated with the application I.D. in conjunction with the device dependent code.

7. The method as claimed in claim 5 or claim 6 including the further step of sending a key associated with the client device from the server to the client device when the application is run on the client device and wherein the request is scrambled by the key.

8. The method as claimed in claim 7 wherein the decryption of the data on the client device in carried out in conjunction with the key sent from the server.

9. The method as claimed in any preceding claim wherein the data is encrypted with an additional key provided by the server.

10. The method as claimed in any of claims 5 to 8 wherein the data comprises one or more individual data files, each data file corresponding to data encrypted by a different encryption algorithm from the algorithm table.

11. The method as claimed in claim 10 wherein the encrypted data contains one or more fields which are set to contain the index to the algorithm required to decrypt the next data file in the series of encrypted data files.

12. The method as claimed in any preceding claim wherein the device is a mobile phone.

13. The method as claimed in claim 12 wherein the device dependent code comprises an application identifier and a unique device code.

14. The method as claimed in claim12 wherein the unique device code is one or more of the following identifiers:
a) an IMEI code of the mobile phone
b) an IMSI code of the mobile phone
c) a SIM card serial number (SER) of the mobile phone
d) an MSISDN of the mobile phone.

15. The method as claimed in any preceding claim wherein the client device is a computer with a telephone number connected to a modem associated with the computer being used as the device dependent code.

16. The method as claimed in claim 5 comprising the further step of switching between algorithms during one of the following situations :
a) after a set period of time,
b) after the encoding of a predefined volume of data, or
c) on a file by file basis.

17. The method as claimed in Claim I further comprising the steps of :
sending data from the server to the client device encrypted with the client device dependent code;
identifying on the client device an encryption algorithm associated with the application; and
using the device dependent code to decrypt the data in accordance with the encryption algorithm.

18. A system for associating data with a client device so that the data can be used only in conjunction with the client device, the system comprising:
means for associating data sent from a server for use with an application on the client device with a client device dependent code; and
means for encrypting the associated data with the client device dependent code and decrypting the data on the client device if the condition that the client device has the same client device dependent code is met, **characterized in that**
a program code for the application is stored on the client device and a copy of the program code is stored on the server, wherein on startup of the application the server requests the client device to transmit a portion of the program code for the application stored on the client device to the server and the server compares the transmitted portion of program code with the corresponding portion of program code stored on the server, and if the program codes do not match, no services are provided by the server to the client.

19. A system according to claim 18 implementing a method of any of claims 2 to 17.

## Patentansprüche

1. Verfahren zum Zuordnen von Daten zu einer Clientvorrichtung derart, dass die Daten nur in Verbindung mit der Clientvorrichtung verwendet werden können, wobei das Verfahren folgende Schritte umfasst:
Zuordnen von von einem Server gesendeten, zur Verwendung bei einer Anwendung in der Clientvorrichtung vorgesehenen Daten zu einem clientvorrichtungsabhängigen Code; und
Verschlüsseln der dem clientvorrichtungsabhängigen Code zugeordneten Daten und Entschlüsseln der Daten in der Clientvorrichtung, wenn die Bedingung, dass die Clientvorrichtung denselben clientvorrichtungsabhängigen Code aufweist, erfüllt ist,
wobei das Verfahren **dadurch gekennzeichnet ist, dass**
ein Programmcode für die Anwendung in der Clientvorrichtung gespeichert ist und eine Kopie des Programmcodes in dem Server gespeichert ist, wobei beim Starten der Anwendung der Server die Clientvorrichtung auffordert, einen Teil des in der Clientvorrichtung gespeicherten Programmcodes für die Anwendung an den Server zu übertragen, und der Server den übertragenen Teil des Programmcodes mit dem entsprechenden Teil des in dem Server gespeicherten Programmcodes vergleicht, und wenn die Programmcodes nicht übereinstimmen, dem Client keine Services von dem Server bereitgestellt werden.

2. Verfahren nach Anspruch 1, bei dem der Schritt des Verschlüsselns der zugeordneten Daten die Verwendung des clientvorrichtungsabhängigen Codes als Verschlüsselungsschlüssel umfasst.

3. Verfahren nach Anspruch 2, bei dem der Schritt des Verschlüsselns der zugeordneten Daten das Verschlüsseln der Daten mit einem oder mehreren in einer Algorithmentabelle enthaltenen, der Anwendung zugeordneten Verschlüsselungsalgorithmen umfasst.

4. Verfahren nach einem der vorhergehenden Ansprüche, bei dem die Daten in dem Server verschlüsselt werden.

5. Verfahren nach einem der vorhergehenden Ansprüche, ferner mit folgenden Schritten:
Senden einer Anforderung nach Daten von der Clientvorrichtung zu dem Server, wobei die Anforderung den vorrichtungsabhängigen Code aufweist, der einen einzigartigen Vorrichtungscode und eine Anwendungs-ID umfasst und der der Daten von dem Server anfordernden Anwendung zugeordnet ist;
Empfangen der Anforderung an dem Server und Verschlüsseln der Daten, die der Anwendungs-ID in Verbindung mit dem vorrichtungsabhängigen Code zugeordnet sind, unter Verwendung eines oder mehrerer in einer in dem Server bereitgestellten Algorithmentabelle enthaltenen Verschlüsselungsalgorithmen; und
Senden der verschlüsselten Daten an die Clientvorrichtung.

6. Verfahren nach Anspruch 5, bei dem die Entschlüsselung der Daten, die der Anwendungs-ID in Verbindung mit dem vorrichtungsabhängigen Code zugeordnet sind, in der Clientvorrichtung durch Anwenden eines oder mehrerer in einer in der Clientvorrichtung befindlichen Kopie der Algorithmentabelle enthaltenen Verschlüsselungsalgorithmen durchgeführt wird.

7. Verfahren nach Anspruch 5 oder 6, ferner mit dem Schritt des Sendens eines der Clientvorrichtung zugeordneten Schlüssels von dem Server an die Clientvorrichtung, wenn die Anwendung auf der Clientvorrichtung läuft, wobei die Anforderung von dem Schlüssel verschlüsselt wird.

8. Verfahren nach Anspruch 7, bei dem das Entschlüsseln der Daten in der Clientvorrichtung in Verbindung mit dem von dem Server gesendeten Schlüssel erfolgt.

9. Verfahren nach einem der vorhergehenden Ansprüche, bei dem die Daten mit einem zusätzlichen von dem Server bereitgestellten Schlüssel verschlüsselt werden.

10. Verfahren nach einem der Ansprüche 5 bis 8, bei dem die Daten eine oder mehrere Einzeldateien umfassen, von denen jede mit einem anderen Verschlüsselungsalgorithmus aus der Algorithmentabelle verschlüsselten Daten entspricht.

11. Verfahren nach Anspruch 10, bei dem die verschlüsselten Daten ein oder mehrere Felder aufweisen, die den Index für den zum Entschlüsseln der nächsten Datei in der Reihe von verschlüsselten Dateien benötigen Algorithmus enthalten.

12. Verfahren nach einem der vorhergehenden Ansprüche, bei dem die Vorrichtung ein Mobiltelefon ist.

13. Verfahren nach Anspruch 12, bei dem der vorrichtungsabhängige Code einen Anwendungsidentifikator und einen einzigartigen Vorrichtungscode aufweist.

14. Verfahren nach Anspruch 12, bei dem es sich bei dem einzigartigen Vorrichtungscode um einen oder mehrere der folgenden Identifikatoren handelt:
a) einen IMEI-Code des Mobiltelefons,
b) einen IMSI-Code des Mobiltelefons,
c) eine SIM-Karten-Seriennummer (SER) des Mobiltelefons,
d) eine MSISDN des Mobiltelefons.

15. Verfahren nach einem der vorhergehenden Ansprüche, bei dem es sich bei der Clientvorrichtung um einen mit einem Modem verbundenen Computer mit einer Telefonnummer handelt, die als vorrichtungsabhängiger Code dem Computer zugeordnet ist.

16. Verfahren nach Anspruch 5, ferner mit dem Schritt des Umschaltens zwischen Algorithmen in einer der folgenden Situationen:
a) nach einem festgesetzten Zeitraum,
b) nach dem Codieren eines vorbestimmten Datenvolumens, oder
c) auf einer Datei-nach-Datei-Basis.

17. Verfahren nach Anspruch 1, ferner mit folgenden Schritten:
Senden von mit dem clientvorrichtungsabhängigen Code verschlüsselten Daten von dem Server zu der Clientvorrichtung;
Identifizieren eines der Anwendung zugeordneten Verschlüsselungsalgorithmus in der Clientvorrichtung; und
Verwenden des vorrichtungsabhängigen Codes zum Entschlüsseln der Daten gemäß dem Verschlüsselungsalgorithmus.

18. System zum Zuordnen von Daten zu einer Clientvorrichtung derart, dass die Daten nur in Verbindung mit der Clientvorrichtung verwendet werden können, wobei das System aufweist:
eine Einrichtung zum Zuordnen von von einem Server gesendeten, zur Verwendung bei einer Anwendung in der Clientvorrichtung vorgesehenen Daten zu einem clientvorrichtungsabhängigen Code; und
eine Einrichtung zum Verschlüsseln der dem clientvorrichtungsabhängigen Code zugeordneten Daten und zum Entschlüsseln der Daten in der Clientvorrichtung, wenn die Bedingung, dass die Clientvorrichtung denselben clientvorrichtungsabhängigen Code aufweist, erfüllt ist,
**dadurch gekennzeichnet, dass**
ein Programmcode für die Anwendung in der Clientvorrichtung gespeichert ist und eine Kopie des Programmcodes in dem Server gespeichert ist, wobei beim Starten der Anwendung der Server die Clientvorrichtung auffordert, einen Teil des in der Clientvorrichtung gespeicherten Programmcodes für die Anwendung an den Server zu übertragen, und der Server den übertragenen Teil des Programmcodes mit dem entsprechenden Teil des in dem Server gespeicherten Programmcodes vergleicht, und wenn die Programmcodes nicht übereinstimmen, dem Client keine Services von dem Server bereitgestellt werden.

19. System nach Anspruch 18, bei dem ein Verfahren nach einem der Ansprüche 2 bis 17 implementiert ist.

## Revendications

1. Procédé pour associer des données à un dispositif client de manière que ces données puissent être utilisées seulement conjointement au dispositif client, le procédé comprenant les étapes de :
- association des données envoyées à partir d'un serveur pour l'utilisation avec une application sur le dispositif client avec un code dépendant du dispositif client ; et
- chiffrage des données associées avec le code dépendant du dispositif client et déchiffrage des données sur le dispositif client si la condition que le dispositif client a le même avec code dépendant du dispositif client est satisfaite,
procédé **caractérisé en ce que**
- un code de programme pour l'application est mémorisé sur le dispositif client et une copie du code de programme est mémorisé sur le serveur, où, au lancement de l'application, le serveur demande au dispositif client de transmettre une portion du code de programme pour l'application mémorisée sur le dispositif client au serveur et le serveur compare la portion transmise du code de programme avec la portion correspondant du code de programme mémorisé sur le serveur et, si les codes de programme ne correspondent pas, aucun service n'est fourni par le serveur au client.

2. Procédé selon la revendication 1, dans lequel l'étape de chiffrage des données associées consiste à utiliser le code dépendant du dispositif client comme une clé de chiffrage.

3. Procédé selon la revendication 2, dans lequel l'étape de chiffrage des données associées consiste en outre à chiffrer les données avec un ou plusieurs algorithmes de chiffrage contenus dans une table d'algorithmes associée à l'application.

4. Procédé selon l'une quelconque des revendications précédentes, dans lequel les données sont chiffrées sur le serveur.

5. Procédé selon l'une quelconque des revendications précédentes comprenant en outre les étapes de :
- transmission d'une demande de données du dispositif client au serveur, la demande comprenant le code dépendant du dispositif comprenant un code de dispositif unique et une identification d'application associée à l'application nécessitant des données provenant du serveur ;
- réception de la demande sur le serveur et chiffrage des données en utilisant un ou plusieurs algorithmes de chiffrage contenus dans une table d'algorithmes prédisposée sur le serveur, associée à l'identification d'application conjointement au code dépendant du dispositif; et
- transmission des données chiffrées au dispositif client.

6. Procédé selon la revendication 5, dans lequel le chiffrage des données sur le dispositif client est exécuté en utilisant un ou plusieurs algorithmes de chiffrage prédisposés sur une copie de la table d'algorithmes située sur le dispositif client, associée à l'identification d'application conjointement au code dépendant du dispositif.

7. Procédé selon la revendication 5 ou 6 comprenant en outre l'étape consistant à envoyer une clé associée au dispositif client du serveur au dispositif client quand l'application est exécutée sur le dispositif client et dans lequel la demande est embrouillée par la clé.

8. Procédé selon la revendication 7, dans lequel le chiffrage des données sur le dispositif client est exécuté en liaison avec la clé transmise à partir du serveur.

9. Procédé selon l'une quelconque des revendications précédentes, dans lequel les données sont chiffrées avec une clé additionnelle fournie par le serveur.

10. Procédé selon l'une quelconque des revendications 5 à 8, dans lequel les données comprennent un ou plusieurs fichiers de données individuels, chaque fichier de données correspondant aux données chiffrées par un algorithme de chiffrage différent provenant de la table d'algorithmes.

11. Procédé selon la revendication 10, dans lequel les données chiffrées contiennent un ou plusieurs champs qui sont établis pour contenir l'index pour l'algorithme nécessaire pour déchiffrer le fichier de données suivant dans la série de fichiers de données chiffrées.

12. Procédé selon l'une quelconque des revendications précédentes, dans lequel le dispositif est un téléphone mobile.

13. Procédé selon la revendication 12, dans lequel le code dépendant du dispositif comprend un identificateur d'application et un code de dispositif unique.

14. Procédé selon la revendication 12, dans lequel le code de dispositif unique est un ou plusieurs des identificateurs suivants :
a) un code IMEI du téléphone mobile
b) un code IMSI du téléphone mobile
c) un numéro de série de carte SIM (SER) du téléphone mobile
d) un code MSISDN du téléphone mobile.

15. Procédé selon l'une quelconque des revendications précédentes, dans lequel le dispositif client est un ordinateur avec un numéro de téléphone connecté à un modem associé à l'ordinateur qui est utilisé comme le code dépendant du dispositif.

16. Procédé selon la revendication 5, comprenant en outre l'étape consistant à commuter entre des algorithmes durant l'une des situations suivantes :
a) après une période de temps déterminée,
b) après le codage d'un volume de données prédéterminé, ou
c) sur une base de fichier par fichier.

17. Procédé selon la revendication 1 comprenant en outre les étapes de :
- transmission des données du serveur au dispositif client, chiffrées avec le code dépendant du dispositif client ;
- identification sur le dispositif client d'un algorithme de chiffrage associé à l'application; et
- utilisation du code dépendant du dispositif pour déchiffrer les données conformément à l'algorithme de chiffrage.

18. Système pour associer des données à un dispositif client de manière que ces données puissent être utilisées seulement conjointement au dispositif client, le système comprenant :
- des moyens pour associer des données envoyées à partir d'un serveur pour l'utilisation avec une application sur le dispositif client avec un code dépendant du dispositif client ; et
- des moyens pour chiffrer les données associées avec le code dépendant du dispositif client et déchiffrer les données sur le dispositif client si la condition que le dispositif client a le même avec code dépendant du dispositif client est satisfaite,
**caractérisé en ce que**
- un code de programme pour l'application est mémorisé sur le dispositif client et une copie du code de programme est mémorisé sur le serveur, où, au lancement de l'application, le serveur demande au dispositif client de transmettre une portion du code de programme pour l'application mémorisée sur le dispositif client au serveur et le serveur compare la portion transmise du code de programme avec la portion correspondant du code de programme mémorisé sur le serveur et, si les codes de programme ne correspondent pas, aucun service n'est fourni par le serveur au client.

19. Système selon la revendication 18 mettant en oeuvre un procédé selon l'une quelconque des revendications 2 à 17.
